# EUROPEAN PATENT APPLICATION

(11) **EP 0 871 099 A2**
(43) Date of publication of application: **14.10.1998**
(21) Application number: 98104141.1
(22) Date of filing: 09.03.1998
(51) Int. Cl.: G05B 19/402

(54) **Electronic control apparatus, utilisable with cutting and milling machines and the like, to obtain constant-depth cuts on slabs**

(30) Priority: 13.03.1997 IT MI970569
(71) Applicant: Sei S.p.A., 24035 Curno BG (IT)
(72) Inventor: Angeloni, Giovanni, 24035 Curno BG (IT); Fustinoni, Ettore, 24035 Curno BG (IT)
(74) Representative: Trupiano, Roberto

(57) **Abstract**

Electronic control apparatus utilisable with milling and cutting machines and the like, to obtain constant-depth cuts, independently on surface undulations and/or unevenness of the material being worked (5), constituted by an internally hollow plate (1) with a perforated bottom, coaxial to the tool and connected to a pressurised air source (7), suitable to constitute an air pad between the plate (1) and the material (5), said plate being anchored to a floating device suitable to follow the undulations of the surface, of the material and to a mechanical device of precision to sense the surface undulations; an electronic device (13) that senses the vertical deviations of the floating device and transmits the same to a control processor (14) suitably programmed to regulate the vertical position of the tool (2).

## Description

The present invention relates to an electronic control mechanical apparatus, utilisable with any cutting, incising and milling machine and the like, suitable to allow the realisation of constant-depth incisions, cuts and hollowings on slabs from any material, independently on the possible surface undulations, unevennesses and/or variations of the same slabs.

As is known, the realisation of non-through incisions and cuts on slabs in general in particular on slabs from material , utilized for instance to obtain synoptic plates and the like, involves the need of being provided with perfectly flat surfaces, in order to obtain cuts of constant depth and therefore suitable to constitute seats for electric fixtures, switches, lamps and the like; in fact, it is well known that any variation or undulation present on the surface to be cut causes cuts of different or in any case not constant depths.

At present, the problem of ensuring a constant depth to the series of incisions made on slabs, in particular slabs from metal, is sometimes solved by using mechanical tracer points that follow the levelness of the surface to be incised or cut, constantly leaning on said surface.

However, the use of this technique involves some severe drawbacks, among which especially the presence of grooves on the surface, produced by the chips caused by the incisions, which chips may insert between the flat support of the tracing points and the material during the working.

Incision techniques are also known that utilise electronic transducers or other types of transducers, depending on the type of material to be worked, which allow the cutting tool to cut the material without any contact between the transducers and the same material.

In the practice, said electronic-type transducers involve very high costs and cannot be utilized with many types of materials, such as wood, plastic materials, and some metals.

Object of this invention is therefore to provide an electronic control mechanical apparatus for cutting machines and the like, so designed and structured as to entirely obviate the drawbacks of the present technologies utilized for obtaining constant-depth cuts and/or millings on slabs, and such as to allow to work on any material whatever, without coming in touch with the latter, and also such as to be of a very contained cost.

A further object of the invention it to provide an apparatus of the above specified type of very simple structure, highly reliable and utilisable with any milling, incising and/or cutting machine, and also on machine that at present are equipped with automatic tool-changers.

Still a further object of the invention is to provide an electronic control mechanical apparatus advantageously utilisable also on any cutting and drawing machines or the like wherein a constant distance of the apparatus from the material to be worked is required.

These and still further objects which will be more clearly stressed later on, are achieved by an electronic control mechanical apparatus utilisable with the present cutting, milling and hollowing machines, suitable to obtain constant depth cuts and/or hollowings on slabs, which apparatus is constituted, according to the present invention, by a plate-shaped box-body, coaxially arranged relatively to the cutting tool of the machine and connected to a pressurised air source, said plate being provided with holes in its lower face, suitable to direct said air towards the surface of the material to be cut, in such a way as to raise said plate and form, between said plate and the material, an air pad capable of ensuring a constant distance between the plate and the material, without any touch between the same, said plate being also connected to a floating device anchored to the machine and then connected to a mechanical precision system, suitable to allow said floating device, during the shifts of the tool on the plane of the material, to follow the undulations of the surface of the material, there being also provided an electronic position sensing device, substantially a transducer or the like, suitable to sense the vertical deviations of said floating system, and therefore also those of the plate relatively to the slab, and to transmit them to an electronic machine control processor suitably programmed to modify the vertical position of the tool-supporting saddle, based on the information obtained by said electronic sensing device, allowing thereby the realisation of constant-depth cuts, without any touch between the plate and the material being worked.

More particularly, said vertically floating device is substantially constituted by a horizontal rod, connected to the plate and provided with uprights or vertical columns, driven within seats obtained in the usual mobile saddle that supports the cutting tool, or on a support lateral to said saddle.

Said mechanical precision device, suitable to allow said floating device to follow the surface undulations of the material being worked, is preferably constituted by a rack integral with one of said plate driving uprights and constantly kept engaged with a toothed pinion associated in its turn to said electronic positioning device.

Said electronic device for sensing the vertical positioning variations of said floating device is also constituted by an encoder, preferably of the photoelectric or optic type.

Said cutting tool is constituted by a mechanical tool of a known type and may be easily changed according to the working to be carried out. The machine, according to the present invention, is so programmed as to providing itself automatically with the suitable tool following the programme, taking it from a special rack arranged by side of the working top.

According to the present invention, said cutting tool may be advantageously constituted by a laser cutting device. The apparatus according to the invention renders particularly advantageous the use of a laser cutting device: in fact, as is known, the cut with such a device must take place exactly in focus, and therefore even minor shifts on the vertical, as happens with contact or sliding apparatuses, involve marked irregularities in the working of the cutting device; such drawbacks are entirely excluded with the apparatus according to the invention.

Further characteristics and advantages of the present invention will be stressed by the following detailed description, made with reference to the attached drawings, which is solely given by way of non limiting indication, and wherein:
Figure 1 shows the schematic front view of a mechanical-electronic apparatus for the realisation of cuts on slabs, without any touch of the same with the material being worked, realised according to the invention and applied to a usual cutting or milling machine, not represented integrally in the figure, while
Figure 2 shows a side view of the apparatus of Figure 1.

With reference to the aforesaid figures, the apparatus of the invention is substantially constituted by a flat body, shaped as an internally hollow circular plate, indicated by 1 in the figure, which is positioned coaxially to the cutting tool 2, activated in a known manner by a vertical axis spindle 3.

Said plate 1 is then mounted in a freely rotary way within a horizontal saddle 4 provided, in a known manner, with horizontal traverse shifts according to the X-Y axes with respect to a slab 5, positioned on the supporting top 6.

Said plate 1 is then connected to a pressurised air source (not represented) through a duct 7 and has in its part facing the material several through-holes suitable to direct air directly towards the upper face of the underlying material 5: the inlet of pressurized air into the plate and especially the air flow emitted by said holes against the material 5 create a pressure effect between the plate and the material, whereby the plate tends to raise and therefore to go away from the material.

The depressure that create thereby tends to draw near again the material and the plate. There creates in this way an air pad between the plate and the material that can ensure that the plate is always at a constant distance from the material 5 each time such plate undergoes relative position variations with respect to the material 5, due to surface undulations or unevennesses of the material 5.

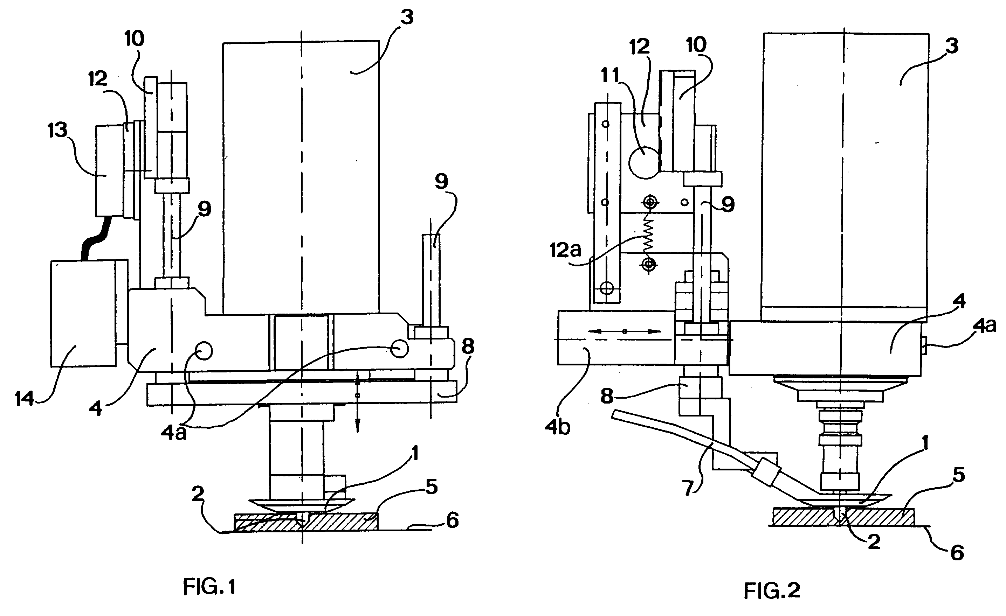

To this aim, plate 1 is anchored in a horizontal crosspiece 8 (Figure 1) supporting two cylindrical vertical rods 9, freely driven within said saddle 4; said crosspiece 8 and said vertical drive rods constitute a vertically floating or oscillating system which is integrally hooked to saddle 4, which is mounted on cylindrical rails 4a, allowing it to be laterally shifted by means of a cylinder 4b.

Therefore, said vertically floating system can follow, during the shifts of the tool in the two directions X-Y while the machine is running, the surface undulations of the material as said undulations, causing variations in the air pad between the plate and the material, shift vertically also plate 1.

These shiftings of the plate are sensed by a mechanical precision system constituted by a rack 10, integral with a plate driving rod 9, engaged with e toothed pinion 11 (Figure 2), supported in its turn by a structure 12, opposite to return springs 12a (Fig. 2).

To said pinion 11 an electronic positioning device is associated, which is constituted by a transducer, substantially an encoder 13 of the photoelectric or the optic type, which provides to relatively sensing the vertical deviations of said floating system and to transmitting the so sensed signals to an electronic machine control processor, for instance like the one schematized and indicated by 14 in Figure 1, which is suitably programmed to modify the vertical position of saddle 4, and therefore the tool, based on the information received from said electronic processor.

From what has been expounded hereinabove, it is apparent that the distance between the plate and the material is kept always constant, without their getting in touch with each other.

In other words, a constant-depth cut is always obtained, independently on the surface variations of the material.

Always according to the invention, the above described apparatus may be installed on any machine for cutting, milling and drawing slabs from any type of material and the like.

Besides, the structure of said apparatus is fit also for those types of machines that use automatic tool-changers.

Lastly, the constant air jet directed towards the surface of the slab being worked offers in practice the advantage of continuously removing from said surface both the chips and the powder produced by the cutting operation; such advantage is especially important in case of workings of slabs from wood or plastic materials.

Obviously, in the practice, in the invention as described and illustrated by way of non limiting indication, structurally and functionally equivalent modifications and variants may be introduced, without departing from the protection scope of said invention.

## Claims

1. An electronic control mechanical apparatus, utilisable with cutting, inciding and millimg machines in general, to obtain constant-depth incisions, cuts and the like on slabs from any material, characterised in that it is constituted by a plate-shaped box-body (1), movable coaxially to the cutting tool (2) of the machine and connected to a pressurised air source (7), said plate (1) being provided with holes in its lower face, suitable to direct said air towards the surface of the material (5) to be cut, so as to raise said plate and to form between the plate and the material an air pad than can ensure a constant distance between the plate and the material, without their coming in touch with each other, said plate (1) being also connected to a floating device (8-9) anchored in the machine and then connected to a mechanical precision system (10-11), suitable to allow said floating device (8-9), during the shifts of tool (2) on the plane of the material, to follow the undulation of the material surface, there being also provided an electronic position sensing device, substantially a transducer (13) or the like, suitable to sense the vertical deviations of said floating system, and therefore also of plate (1) with respect to slab (5), and to transmit them to an electronic machine control processor (14), suitably programmed to modify the vertical position of saddle (4) supporting tool (2), based on the information sensed by said electronic sensing device (13) allowing thereby to realise constant-depth cuts, without any touch between the plate and the material being worked.

2. The apparatus according to claim 1, characterised in that said floating device (8-9) comprises a horizontal rod (8) connected to plate (1) and provided with uprights (9) slidingly driven within seats obtained or associated to said saddle (4) supporting tool (2).

3. The apparatus according to claim 1, characterised in that said mechanical precision device (10-11), suitable to allow said floating device (8-9) to follow the surface undulations of the material (5) comprises a rack (10), integral with an upright (9) of the same floating device and engaged with a toothed pinion (11) associated in its turn to said electronic position sensing device (13).

4. The apparatus according to claim 1, characterised in that said electronic sensing device is constituted by an encoder (13) of the photoelectric, optic type or the like.

5. The apparatus according to claim 1, characterised in that said cutting tool is constituted by a laser cutting device.

6. The apparatus according to one or more of the preceding claims, characterised in that it is utilisable to realise cuts and the like on slabs from any material, without any touch between plate (1) and the underlying material.

7. The apparatus according to preceding claims, characterised in that it is utilisable also on cutting and milling machines and the like that are provided with automatic tool-changer (2).

8. A process for the realisation of constant depth cuts, hollowings and the like on slabs, by means of cutting and milling machines and the like, characterised in that it comprises the following steps:
- constantly creating a compressed air pad between a plate that moves vertically, coaxially to the machine tool, and the surface of the material to be treated, suitable to ensure a constant distance between the plate and the material during the cutting operations, then
- providing a floating device, substantially vertically oscillating, integral with the machine and the movable plate, and rigidly connected to a mechanical precision device, substantially a rack and toothed pinion system, suitable to allow, during the shifts of the cutting tool on the material, said floating device to follow the surface undulations of the material, then
- sensing in a relative manner and through electronic position sensing means, the vertical deviations of said floating system integral with the plate, and transmitting the signals related to said deviations to an electronic machine control processor, suitably programmed to modify the vertical position of the tool support based on the information received.
